# EUROPEAN PATENT APPLICATION

(11) **EP 4 700 898 A1**
(43) Date of publication of application: **25.02.2026**
(21) Application number: 24195728.1
(22) Date of filing: 21.08.2024
(51) Int. Cl.: H01M 10/42, H01M 10/48, H01M 50/317, H01M 50/30

(54) **VENTING DEVICE FOR A BATTERY, BATTERY COMPRISING THE VENTING DEVICE, AND ELECTRIC VEHICLE COMPRISING THE BATTERY**

(71) Applicant: Hidria d.o.o., 5281 Spodnja Idrija (SI)
(72) Inventor: ROVSCEK, Domen, 5000 Nova Gorica (SI); HERMAN, Jost, 5220 Tolmin (SI); KUTIN, Vasja, 5283 Slap ob Idrijci (SI); LIPUSCEK, Ana, 5214 Kal nad Kanalom (SI)
(74) Representative: Ipsilon

(57) **Abstract**

The invention relates to a venting device (10) for a battery (100), the venting device (10) comprising:
- a housing (20), wherein the housing (20) includes an inner wall (22) which defines a channel (21) for fluidly connecting an inner volume (BV) of the battery (100) to ambient air (AV);
- a barrier (30, 70) which extends across the channel (21) and thereby defines a battery-side portion (21B) of the channel (21); and
- a sensor system (50) configured to measure at least one quantity indicative of thermal runaway of the battery (100), wherein at least one sensor (51, 52, 55, 56) of the sensor system (50) is arranged in the battery-side portion (21B) of the channel (21).

The invention further relates to a battery (100) comprising the venting device (10), and to an electric vehicle comprising the battery (100).

## Description

The invention relates to a venting device for a battery, to a battery comprising the venting device, and to an electric vehicle comprising the battery.

Batteries, and in particular lithium-ion (Li-ion) batteries, are vulnerable to thermal runaway. Thermal runaway is the phenomenon where, once the battery has reached a certain temperature (sometimes known as the runaway temperature), an exothermic chemical reaction starts, which increases the temperature of the battery, which in turn increases the reaction rate of the exothermic chemical reaction, and so on until the battery catastrophically fails and/or catches fire. Thermal runaway is therefore a major safety concern, as it can lead to explosions and/or fires, which can be very dangerous in closed environments. Examples of closed environments include garages and covered parking lots for electric vehicles, or more generally any closed room in which one or more batteries have been installed.

To address this concern, it is now typical to provide batteries with a venting device. A venting device is meant to provide a pathway for the high pressure gases generated inside the battery during thermal runaway (or shortly before a thermal runaway) to escape from the battery housing of the battery.

In fact, a venting device may be required by safety requirements, e.g. to comply with ASIL D (Automotive Safety Integrity Level D) safety requirements.

To meet such requirements, it has been proposed to provide the venting device with an alarm system to warn a user when thermal runaway is about to occur.

For instance, in patent document CN112787029A, it is proposed that a diaphragm of the venting device has a detection circuit, the detection circuit being torn when the diaphragm is ruptured by the high pressure gases escaping through the venting device, whereby thermal runaway is detected and a corresponding alarm is sent.

However, such a venting device is premised on the diaphragm being ruptured, which happens only when a substantial amount of gases has already been generated.

Therefore, there is still room for improvement with respect to detection of thermal runaway in batteries.

The invention aims to provide a venting device which enables early detection of thermal runaway in the battery to which the venting device is fitted.

Therefore, the invention relates to a venting device for a battery, the venting device comprising:
- a housing, wherein the housing includes an inner wall which defines a channel for fluidly connecting an inner volume of the battery to ambient air;
- a barrier which extends across the channel to define a battery-side portion of the channel; and
- a sensor system configured to measure at least one quantity indicative of thermal runaway of the battery, wherein at least one sensor of the sensor system is arranged in the battery-side portion of the channel.

In such a venting device, the barrier (which can be constructed in several different ways as detailed below) may rupture and/or be dislodged when pressure in the inner volume of the battery increases due to the generation of gases during thermal runaway of the battery, thus providing a pathway for the gases to escape from the battery housing, as in the prior art mentioned above. But in addition to this known working principle, the invention further provides that at least one sensor of the sensor system is arranged in the battery-side portion of the channel, and therefore is in the inner volume of the battery, which inner volume is separated from ambient air by the membrane before the barrier ruptures and/or is dislodged. Said sensor(s) may therefore indicate conditions existing within the inner volume of the battery even before the barrier ruptures and/or is dislodged, thus allowing early detection of thermal runaway in the battery to which the venting device is fitted. Many types of sensors are possible within the scope of the invention; specific examples are provided below.

In certain embodiments, the venting device further comprises a printed circuit board, at least a part of the sensor system being arranged on the printed circuit board.

In some preferred embodiments, the printed circuit board includes:
- a sensor support portion extending into the battery-side portion of the channel, said part of the sensor system being arranged on the sensor support portion; and
- an electronics support portion, the electronics support portion being arranged in a recess of the housing, the recess opening onto the battery-side portion of the channel.

Alternatively, in one particular embodiment, the printed circuit board is arranged on the inner wall of the housing.

In some highly simplified embodiments, the sensor system comprises a single sensor arranged in the battery-side portion of the channel. For instance, said single sensor could be a pressure sensor. However, it is preferable that the sensor system comprises sensors of at least two of the different types mentioned below, each measuring a distinct quantity indicative of thermal runaway of the battery. By measuring at least two distinct quantities indicative of thermal runaway of the battery, false positive detections of thermal runaway in the battery can be avoided.

In some preferred embodiments, the sensor system comprises at least one gas sensor arranged in the battery-side portion of the channel and configured to measure a concentration of a gas. The gas is preferably a gas which may be generated during thermal runaway of the battery, for instance due to evaporation of an electrolyte of the battery, chemical decomposition of said electrolyte, evaporation of a cooling liquid of the battery, or chemical decomposition of said cooling liquid. Accordingly, in preferred embodiments, the gas is at least one of: a carbonate ester, preferably a carbonate ester selected from the group consisting of ethylene carbonate, dimethyl carbonate, and diethyl carbonate; propylene glycol; methane; dihydrogen; and ethylene.

In some preferred embodiments, the sensor system comprises a temperature sensor and/or a pressure sensor arranged in the battery-side portion of the channel.

In some preferred embodiments, the housing comprises a breathing port for fluidly connecting the inner volume of the battery to ambient air by bypassing the barrier, and a valve which closes the breathing port, the venting device being configured to open the valve in response to a pressure difference between the inner volume of the battery and ambient air being greater than a pressure difference threshold.

The barrier may comprise, or consist of, a membrane. Optionally, the membrane is air-permeable. In some embodiments, the membrane divides the channel into the battery-side portion and an ambient air-side portion.

In some preferred embodiments, the sensor system comprises a microphone.

Alternatively, in some preferred embodiments, the venting device comprises a magnet fixed to or deposited on the membrane and the sensor system comprises a coil, the coil and the magnet being arranged such that a movement of the membrane moves the magnet and thereby induces an electrical current in the coil.

Alternatively, in some preferred embodiments, the sensor system comprises a capacitor plate, the capacitor plate and the membrane being arranged such that a movement of the membrane results in a change of a capacitance between the capacitor plate and the membrane.

In some preferred embodiments, the barrier comprises a cover which is air-impermeable and arranged to be exposed to ambient air when the venting device is fitted to the battery, the cover having a closing position in which the cover closes the channel. According to one possibility, the barrier consists of the cover, and accordingly the above-mentioned membrane is absent. According to another possibility, the barrier comprises both the cover and the above-mentioned membrane which divides the channel into the battery-side portion and an ambient air-side portion; in this case, in the closing position, the cover closes the ambient air-side portion of the channel. In either alternative, the sensor system preferably further comprises a cover sensor configured to detect whether the cover has moved from the closing position to a dislodged position in which the cover does not close the channel. Preferably, the cover sensor comprises a switch configured to switch when the cover moves from the closing position to the dislodged position. The switch preferably contact the cover when the cover is in the closing position. Preferably, the switch is a microswitch.

In some preferred embodiments, the venting device further comprises a particle arrestor which is arranged to be within the inner volume of the battery when the venting device is fitted to the battery, the particle arrestor comprising a grille which opens into the battery-side portion of the channel.

In some preferred embodiments, the cover comprises a protrusion arranged in the channel, and the particle arrestor further comprises an elastic portion, the elastic portion engaging the protrusion to maintain the cover in the closing position.

The invention also relates to a battery, the battery comprising:
- a battery housing, the battery housing comprising a plurality of housing walls which together enclose an inner volume of the battery, one of the housing walls having a venting hole;
- at least one battery cell arranged in said inner volume; and
- a venting device according to any one of the embodiments described above, the venting device being received in the venting hole such that the channel of the venting device fluidly connects said inner volume to ambient air.

The invention extends to an electric vehicle comprising a battery according to the invention. The term "electric vehicle" encompasses battery electric vehicles (BEVs) as well as hybrid electric vehicles (HEVs). In either type of electric vehicle, the battery typically provides electrical power to a powertrain of the electric vehicle.

The battery according to the invention is well-suited to electric vehicles, as thermal runaway of the battery is a major concern for garages and covered parking lots for electric vehicles, and more generally for drivers and passengers of electric vehicles.

In some embodiments, the electric vehicle further comprises a vehicle electronic control unit and the battery includes a battery management system.

In some embodiments in this case, one among the vehicle electronic control unit and the battery management system is connected to the sensor system and is configured to generate an alarm upon determining, based on an output of the sensor system, that thermal runaway of the battery has started.

In other embodiments in this case, the venting device further comprises a controller connected to the sensor system, the controller being configured to generate an alarm upon determining, based on an output of the sensor system, that thermal runaway of the battery has started, and to transmit the alarm to the battery management system or to the vehicle electronic control unit. Said controller may be, for instance, a microcontroller unit arranged on the printed circuit board of the venting device.

The invention further relates to a stationary energy storage system comprising a battery according to the invention. The term "stationary energy storage system" encompasses any energy storage system not aboard a vehicle which stores electrical energy in the battery, such as a battery storage power station or a battery energy storage system (BESS).

The battery according to the invention is also well-suited to such systems, as they may include many large capacity batteries in close proximity to each other and therefore thermal runaway of a battery is also a major concern.

Irrespective of the formal presentation that is provided, unless explicitly stated otherwise, the various features specified above or hereafter must not be considered to be closely or inextricably linked to each other, the invention can relate to only one of these structural or functional features, or to only some of these structural or functional features, or to only part of one of these structural or functional features, or even to any group, combination or juxtaposition of all or some of these structural or functional features.

Further aims, features and advantages of the invention will become apparent upon reading the following description, which is provided by way of a nonlimiting example of some of its possible embodiments, and with reference to the accompanying drawings, in which:
- figure 1 is a schematic exploded view of a battery to which a venting device according to the invention can be fitted;
- figure 2 is a schematic cross-section view along line II-II on figure 1, showing a venting device according to one embodiment of the invention;
- figure 3 is a schematic top view of a printed circuit board (PCB) of the venting device shown on figure 2;
- figure 4 is a schematic cross-section view similar to figure 2, showing a venting device according to another of the invention;
- figure 5 is a schematic cross-section view similar to figure 2, showing a venting device according to yet another embodiment of the invention;
- figure 6 is a schematic cross-section view similar to figure 2, showing a venting device according to still another embodiment of the invention;
- figure 7 is a schematic cross-section view similar to figure 2, showing a venting device according to still another embodiment of the invention;

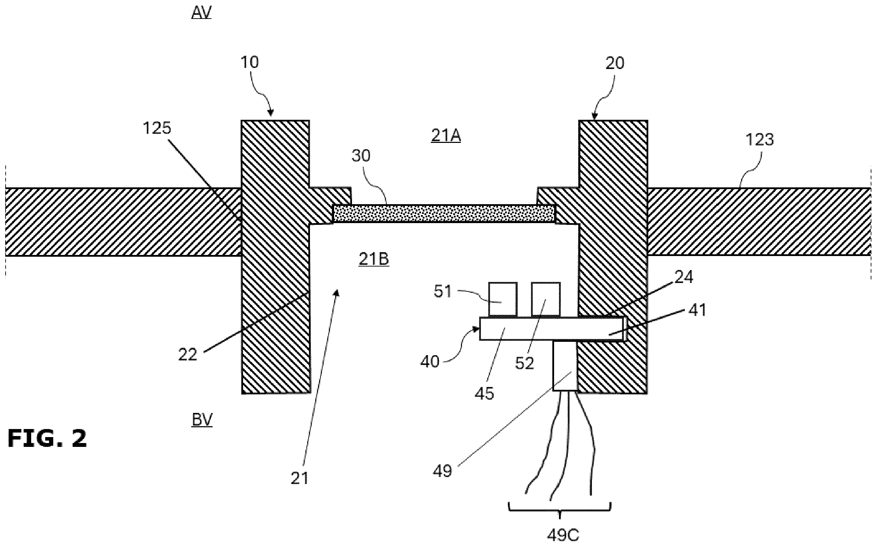

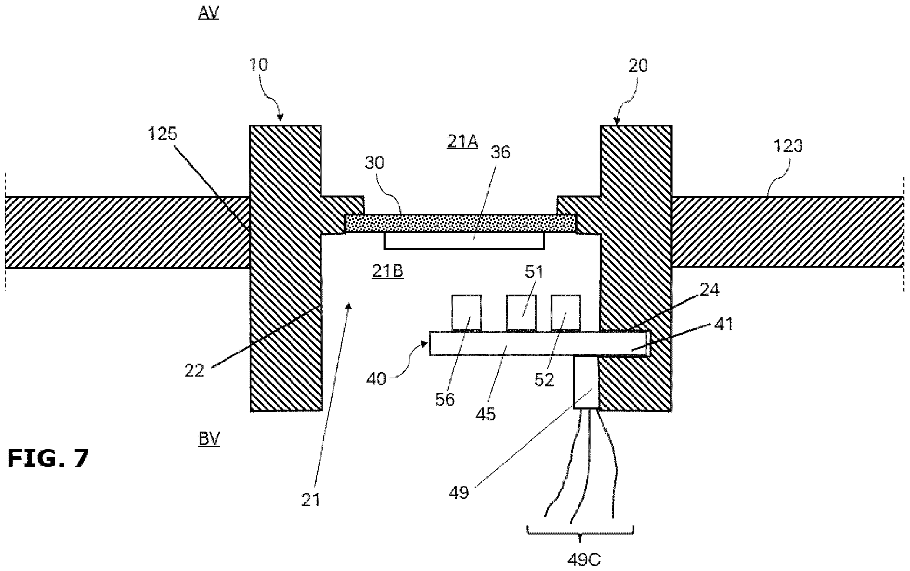

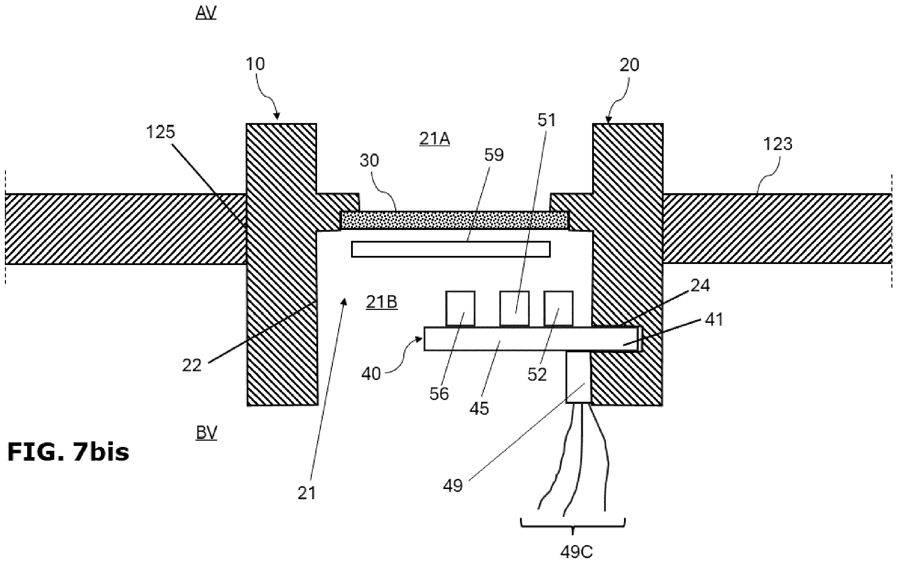

- figure 7bis is a schematic cross-section view similar to figure 2, showing a venting device according to still another embodiment of the invention;

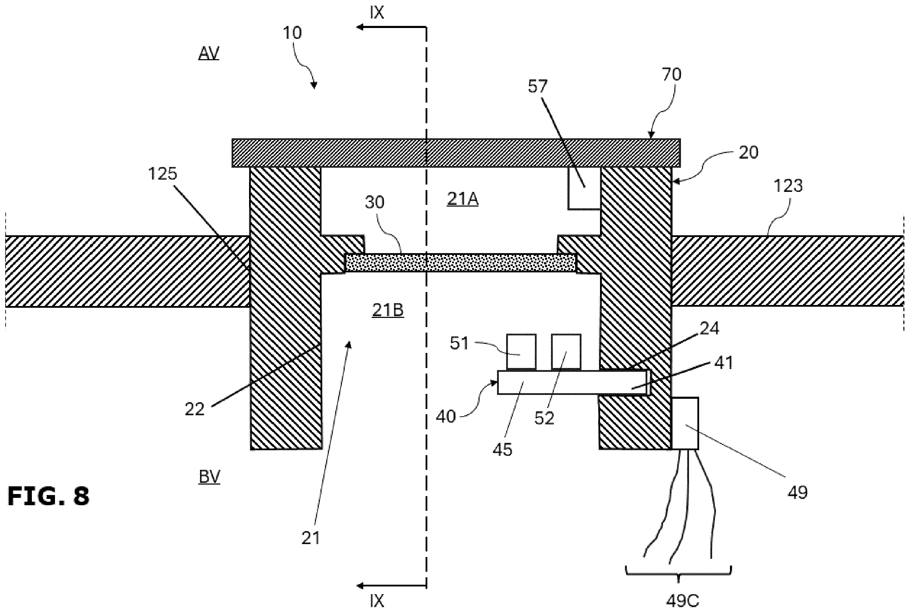

- figure 8 is a schematic cross-section view similar to figure 2, showing a venting device according to still another embodiment of the invention;

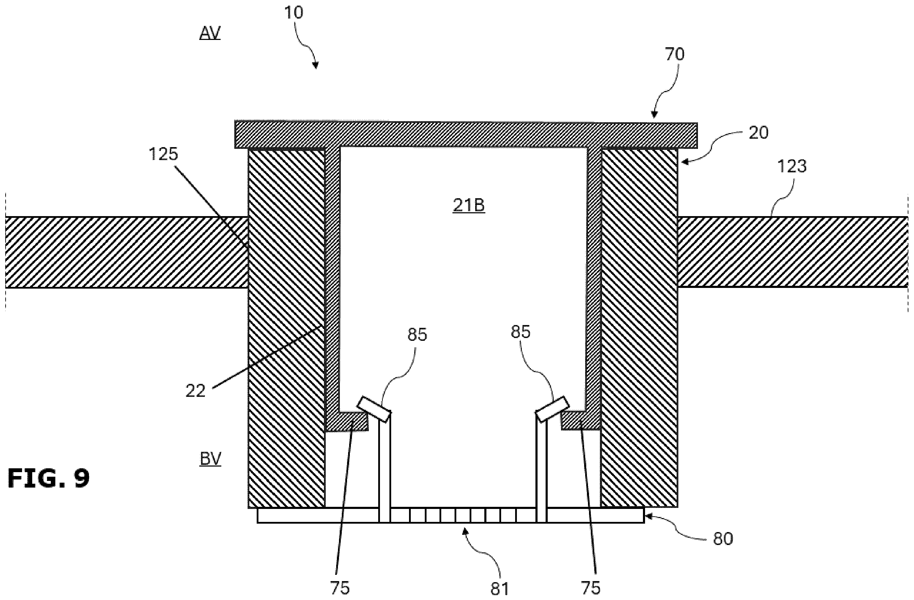

- figure 9 is a schematic cross-section along line IX-IX on figure 8, showing a venting device according to still another embodiment of the invention;

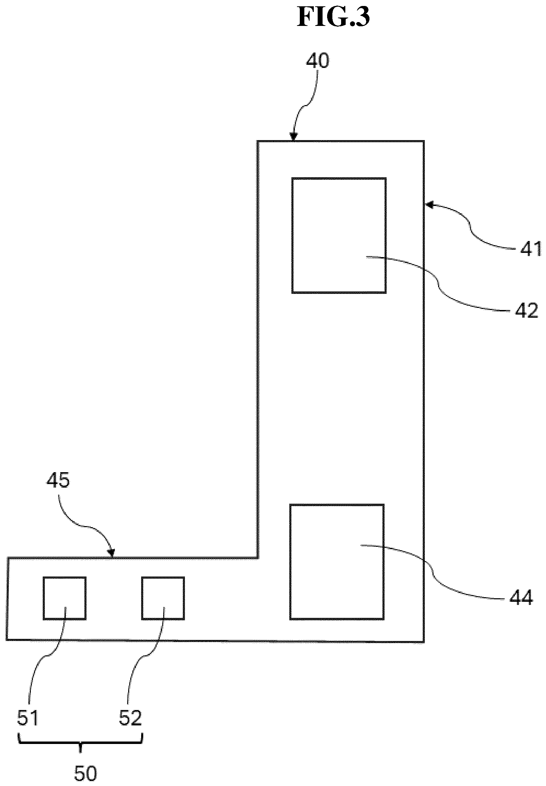

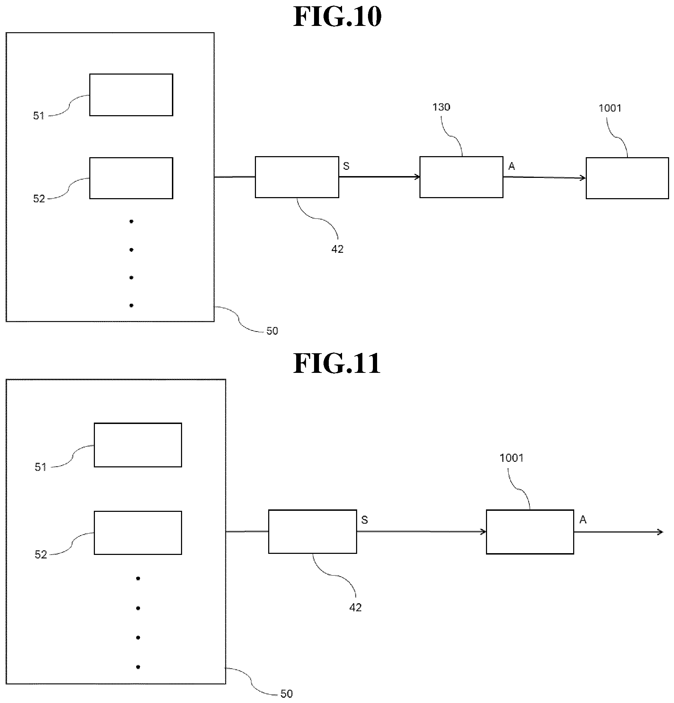

- figure 10 is a functional block diagram, showing the connection of the microcontroller of the PCB of figure 3 to a battery management system, according to one embodiment;
- figure 11 is a functional block diagram similar to figure 10, showing the connection of the microcontroller of the PCB of figure 3 to an outside controller, according to another embodiment;

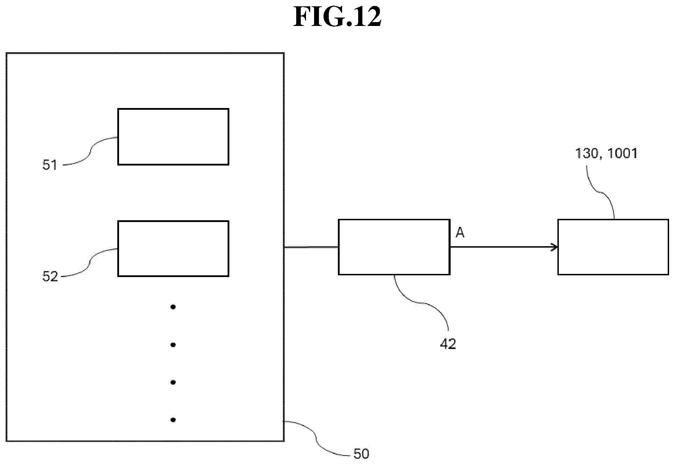

- figure 12 is a functional block diagram similar to figure 10, showing the connection of the microcontroller of the PCB of figure 3 to an outside controller, according to yet another embodiment.

It is emphasized that all the drawings are schematic and are not necessarily to scale. Therefore, the drawings are not necessarily representative of the shapes, dimensions, or relative sizes of the elements shown.

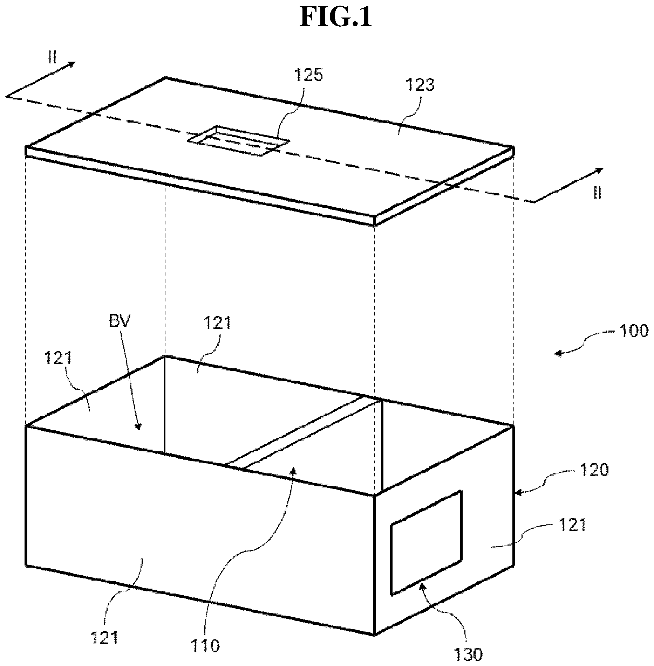

Figure 1 shows in exploded view a battery 100. The battery 100 comprises a battery housing 120. The battery housing 120 comprises a plurality of housing walls, namely side walls 121, a top wall 123, and a bottom wall (not shown). The housing walls together enclose an inner volume BV of the battery 100. One or more battery cells 110, of which only one is shown on figure 1, are arranged in the inner volume BV.

One of the housing walls, here the top wall 123, has a venting hole 125 for receiving a venting device 10 described below. Of course, the venting hole 125 may be provided in any of the housing walls.

Also shown schematically on figure 1 is a battery management system (BMS) 130 attached to the battery 100 or otherwise associated with the battery 100. As is known, the BMS 130 monitors and manages the battery cells 110, and more generally monitors and manages the condition of the battery 100.

The battery 100 may be a lithium-ion (Li-ion) battery or another type of battery, such as a lead-acid battery.

Figure 2 shows in cross-section a venting device 10 received in the venting hole 125. The venting device 10 comprises a housing 20. The housing 20 includes an inner wall 22 which defines a channel 21. The housing 20 may be made, for instance, by injection molding of a suitable plastic, in particular a fiber-reinforced plastic. Examples of suitable fiber-reinforced plastics include glass-fiber reinforced polybutylene terephthalate (PBT) such as PBT 30GF and glass-fiber reinforced PA66 such as PA66 30GF, which provide good stability under heat. Preferably, the plastic or fiber-reinforced plastic comprises one or more anti-flaming agents. Alternatively, the housing 20 may be made of a metal or of a metal alloy, such as aluminum or an aluminum alloy.

A membrane 30 extends across the channel 21 and divides the channel 21 into a battery-side portion 21B and an ambient-air side portion 21A. The membrane 30 may be air-permeable, in other words permeable to ambient air AV, which allows to gradually equalize the pressure in the inner volume BV with the pressure of ambient air AV. In any case, the membrane 30 is configured to rupture when pressure in the inner volume BV increases due to the generation of gases during thermal runaway of the battery 100. As a result, said gases may flow from the inner volume BV to ambient air AV through the channel 21; in other words, the channel 21 fluidly connects the inner volume BV of the battery 100 to ambient air AV.

With reference to figures 2 and 3, the venting device 10 also comprises a sensor system 50 arranged in the battery-side portion 21B of the channel 21.

The sensor system 50 is configured to measure at least one quantity indicative of thermal runaway of the battery 100. The expression "quantity indicative of thermal runaway of the battery 100" is meant to encompass any quantity which is such that when a certain variation (e.g., increase above a threshold, decrease below a threshold, increase at greater than a specified increase rate, etc.) of the quantity occurs, a determination may be made that thermal runaway of the battery 100 is occurring or is about to occur. For example, the determination may be made based on only the variation of the quantity, or alternatively based on the simultaneously occurring variation of two or more quantities. The latter option is preferable to avoid false positive detections of thermal runaway in the battery 100.

For each such quantity, the sensor system 50 includes a corresponding sensor configured to measure this quantity. At least one of said sensors is arranged in the battery-side portion 21B of the channel 21.

Merely for illustration, examples of a quantity indicative of thermal runaway of the battery 100 include: temperature within the battery-side portion 21B of the channel 21; pressure within the battery-side portion 21B of the channel 21; and concentration of a specified gas within the battery-side portion 21B of the channel 21. Preferably, the sensor system 50 measures at least two of said temperature, pressure and concentration; more preferably, the sensor system 50 measures all three of said temperature, pressure and concentration. Preferably in this case, the determination that thermal runaway of the battery 100 is occurring or is about to occur is made based on the simultaneously occurring variation of at least two of said temperature, pressure and concentration. Thus, if a pressure spike is detected whereas the temperature and the concentration of the specified gas stay the same, the determination is not made because the cause of the pressure spike is not thermal runaway, but some other cause such as hitting a stone or another foreign object. Thereby, false positive detections of thermal runaway in the battery 100 can be avoided.

In the example shown on figure 2, the sensor system 50 includes at least one gas sensor 51 for measuring a concentration of a specified gas within the battery-side portion 21B of the channel 21 and a temperature sensor 52 for measuring the temperature within the battery-side portion 21B of the channel 21.

The specified gas is a gas which may be generated during thermal runaway of the battery 100, for instance due to evaporation of an electrolyte of the battery 100, chemical decomposition of said electrolyte, evaporation of a cooling liquid of the battery 100, or chemical decomposition of said cooling liquid.

Accordingly, in preferred embodiments, the specified gas is at least one of: a carbonate ester, preferably a carbonate ester selected from the group consisting of ethylene carbonate (also known as "EC"; CAS number 96-49-1), dimethyl carbonate (also known as "DMC"; CAS number 616-38-6), and diethyl carbonate (also known as "DEC"; CAS number 105-58-8); propylene glycol; methane; dihydrogen; and ethylene.

Carbonate esters, and in particular the carbonate esters EC, DMC and DEC are widely used in electrolytes for Li-ion batteries, which makes the venting device 10 especially adapted when the battery 100 is a Li-ion battery. Propylene glycol is widely used in cooling liquids for batteries. Methane, dihydrogen and ethylene may be generated during the chemical decomposition of carbonate esters and propylene glycol. Thus, when the concentration of one of these compounds increases, a determination may be made that thermal runaway of the battery 100 is occurring or is about to occur. Note that these compounds may be regarded as belonging to the class of volatile organic compounds (VOCs).

Many different types of sensors may be used as the gas sensor 51. For instance, the gas sensor 51 may be selected from the following types of gas sensors:
a. Metal oxide semiconductor (MOS) sensor. Sensors of this type detect VOCs by measuring changes in resistance when the sensor surface interacts with VOC molecules. Advantages include sensitivity, relatively low cost, and durability.
b. Electrochemical sensor. Sensors of this type work by reacting with VOCs at an electrode surface, producing a measurable electrical current. They are highly sensitive and specific to certain types of VOCs, making them useful for targeted monitoring of specific compounds generated during thermal runaway of the battery 100, such as the compounds listed above.
c. Photoionization detector (PID). PIDs use ultraviolet (UV) light to ionize VOC molecules. The ionized molecules generate a current proportional to the VOC concentration. Advantages include high sensitivity and ability to detect a wide range of VOCs at low concentrations.
d. Non-dispersive infrared (NDIR) sensor. NDIR sensors detect gases by measuring the absorption of infrared light at specific wavelengths characteristic of the gas molecules. While traditionally used for gases like CO₂, they are also suitable for VOC detection, provided that the target VOC has a suitable infrared absorption spectrum. NDIR sensors are suitable for detecting some or all of the compounds listed above.
e. Quartz crystal microbalance (QCM) sensor. QCM sensors measure the change in frequency of a quartz crystal resonator caused by the mass of VOC molecules adsorbed on the sensor surface. They offer high sensitivity and can detect very low levels of VOCs.
f. Colorimetric sensor. These sensors use a color-changing chemical reagent that reacts with VOCs. The color change can be measured optically.

In some embodiments, the gas sensor is selected from MOS sensors, electrochemical sensors and NDIR sensors.

If desired, more than one gas sensor 51 may be provided in the sensor system 50. In this case, each gas sensor 51 may independently be of any of the above-mentioned types.

The sensor system 50 may be provided at any location in the battery-side portion 21B of the channel 21. However, preferably, the venting device 10 comprises a printed circuit board (PCB) 40 and at least a part of the sensor system 50 is arranged on the PCB 40. In some preferred embodiments, the entire sensor system 50 may be arranged on the PCB 40.

Figure 3 is a top view of the PCB 40 shown on figure 2, viewed in the direction going from the ambient air-side portion 21A of the channel 21 to the battery-side portion 21B of the channel 21, that is, from top to bottom on the drawing on figure 2. As shown, in the embodiment of figures 2 and 3, the PCB 40 comprises a sensor support portion 45 and an electronics support portion 41. The sensor system 50, or the part of the sensor system 50 which is arranged on the PCB 40, is arranged on the sensor support portion 45. Meanwhile, on the electronics support portion 41, there are arranged a microcontroller unit (MCU) 42 for processing the signals output by the sensors 51, 52, a power supply unit 44 for powering the MCU 42 and the sensor system 50, and preferably also peripherals (not shown) of the PCB 40. Further, as shown on figure 2, the sensor support portion 45 extends into the battery-side portion 21B of the channel 21, whereas the electronics support portion 41 is arranged in a recess 24 of the housing 20, the recess 24 opening onto the battery-side portion 21B. In this way, the sensors 51, 52 can be easily positioned in the battery-side portion 21B of the channel 21, while the recess 24 tends to shield the electronics support portion 41 (and therefore the MCU 42, the power supply unit 44 and the peripherals of the PCB 40) from the gases generated during thermal runaway of the battery 100. This enhances the reliability of the detection of thermal runaway by the sensor system 50.

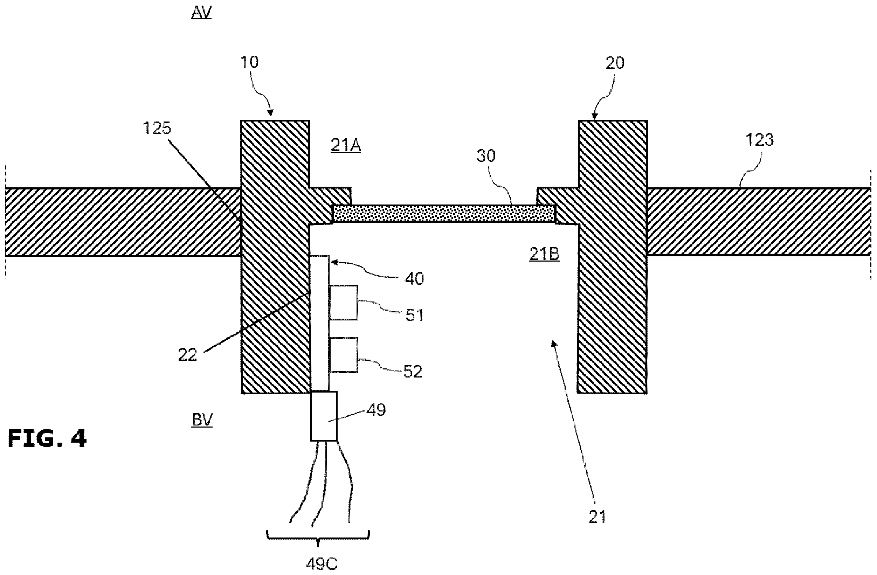

In an alternative embodiment, as shown on figure 4, the PCB 40 is arranged on the inner wall 22, whereby both the sensor support portion 45 and the electronics support portion 41 extend into the battery-side portion 21B. While according to this alternative embodiment, the electronics support portion 41 is not as well shielded from the gases generated during thermal runaway of the battery 100, it is easier to install the PCB 40 and therefore the manufacture of the venting device 10 is easier and less costly.

Both figure 2 and figure 4 show that the venting device 10 further comprises a connector 49. As shown schematically, the connector 49 allows to connect wires or cables 49C to the PCB 40, for powering the PCB 40 and for data transmission to and from the PCB 40.

Preferably, as shown on figure 2 and figure 4, the connector 49 is within the inner volume BV when the venting device 10 is inserted in the venting hole 125. In this way, the battery housing 120 tends to shield the connector 49 from outside elements such as water, dust, etc. Further, the battery housing 120 may comprise an inner connector (not shown) which mates with the connector 49 when the venting device 10 is inserted in the venting hole 125.

The connector 49 may be positioned adjacent to the PCB 40 as shown on figure 2 and figure 4. Alternatively, the connector 49 may be positioned at different locations in the venting device 10.

Alternatively, if desired, the connector 49 could be exposed to ambient air AV when the venting device 10 is inserted in the venting hole 125.

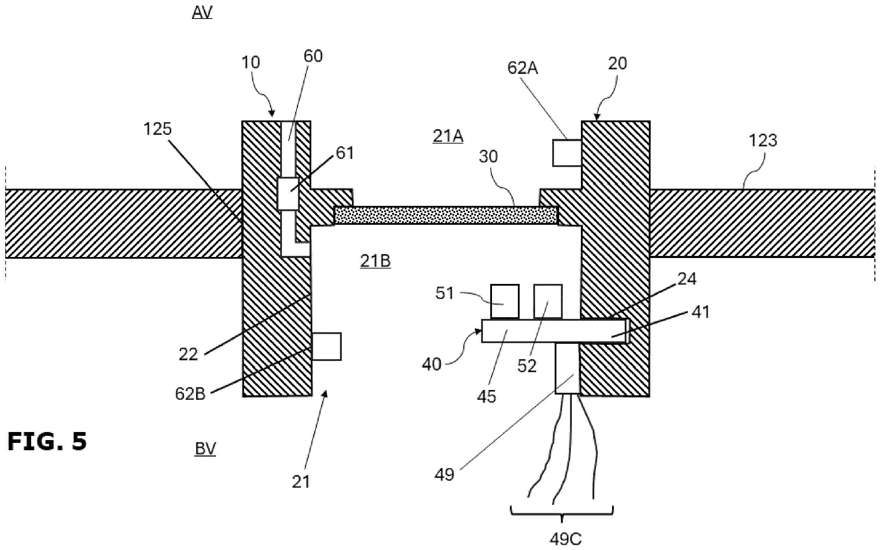

In some embodiments, as shown on figure 5, the housing 20 comprises a breathing port 60 which bypasses the membrane 30 and a valve 61. The valve 61 closes the breathing port 60, whereby when the valve 61 is open, the breathing port 60 allows ambient air AV to enter the inner volume BV of the battery 100 without passing through the membrane 30, in other words, the breathing port 60 fluidly connects the inner volume BV to ambient air AV by bypassing the membrane 30.

The valve 61 thus provides a breathing function, i.e., a function of equalizing the pressure within the inner volume BV to the pressure of ambient air AV. Indeed, the pressure within the inner volume BV may become different from the pressure of ambient air AV because of a change in elevation and/or an increase in temperature of the battery 100. However, letting ambient air AV in the inner volume BV can introduce moisture in the inner volume BV, which can lead to condensation forming in the inner volume BV. For this reason, it is contemplated that the valve 61 opens only in response to a pressure difference between the inner volume BV and ambient air AV being greater than a pressure difference threshold, i.e., in response to the pressure difference being sufficiently large. Accordingly, ambient air AV is introduced in the inner volume BV only when necessary in view of the pressure difference.

Many different constructions are possible for the valve 61. In one example, the valve 61 is actuated based on the measurements of two pressure sensors 62A, 62B, the pressure sensor 62A being exposed to ambient air AV and the pressure sensor 62B being arranged in the inner volume BV, for instance by being arranged in the battery-side portion 21B of the channel 21. In this case, the valve 61 may be controlled by the MCU 42. For instance, the valve 61 may be a solenoid valve. In another example, the valve 61 is a mechanical valve which spontaneously opens in response to the pressure difference being sufficiently large.

Figure 5 shows that the breathing port 60 opens into the inner wall 22, whereby the breathing port 60 fluidly connects the battery-side portion 21B of the channel 21 to ambient air AV by bypassing the membrane 30. Other arrangements of the breathing port 60 than shown on figure 5 are possible, however.

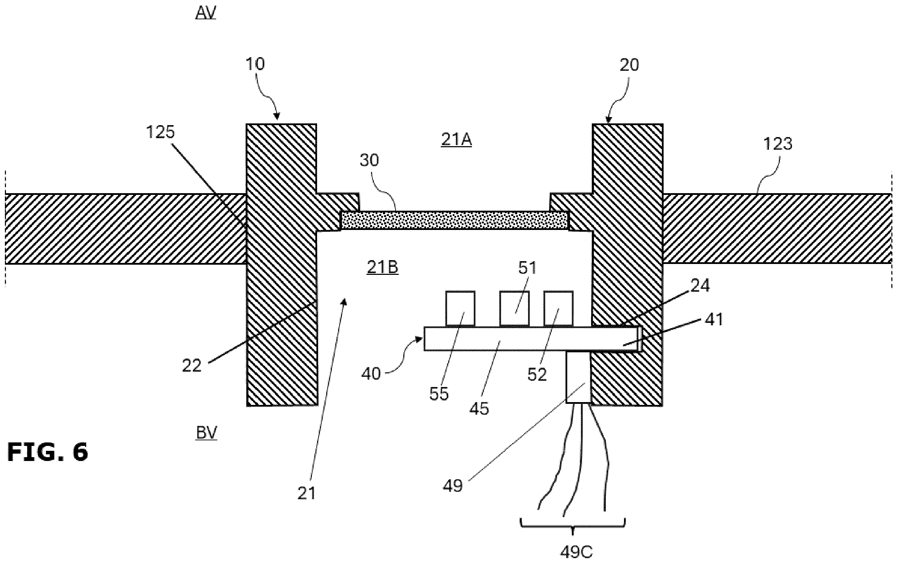

In some embodiments, as shown on figure 6, the sensor system 50 comprises a microphone 55. The microphone 55 may be, for instance, a dynamic microphone, an electret microphone, or a MEMS (microelectromechanical systems) microphone, which allows to use an off-the-shelf component (for example, for mobile phones) as the microphone 55. The microphone 55 may enable the sensor system 50 to detect a transient pressure spike resulting from the generation of high pressure gases during thermal runaway, before the membrane 30 ruptures due to the overpressure in the channel 21. Further, sound analysis may be performed on the output of the microphone 55 to determine whether the output of the microphone 55 indicates rupture of the membrane 30.

Alternatively to the microphone 55, as shown on figure 7, there is provided a magnet 36 on the membrane 30 and a coil 56 on the PCB 40, for instance on the sensor support portion 45 of the PCB 40. The magnet 36 is deposited on the membrane 30, for example by printing, or otherwise fixed to the membrane 30. The coil 56 and the magnet 36 are arranged such that a movement of the membrane 30 moves the magnet 36 and thereby induces an electrical current in the coil 56. In this case, the membrane 30, the magnet 36 and the coil 56 effectively together constitute a dynamic microphone, and therefore may be used like the microphone 55 as described above in relation to figure 6. In addition, by circulating an electrical current through the coil 56, the magnetic field generated by the coil 56 interacts with the magnet 36 and the membrane 30 thereby moves. The membrane 30 thus effectively acts as the membrane of a speaker. Accordingly, the membrane 30 can be used to generate sound. Applications of this principle will be described below.

As yet another alternative to the microphone 55, as shown on figure 7bis, the sensor system 50 comprises a capacitor plate 59, possibly perforated, which is positioned at a distance from the membrane 30. The capacitor plate 59 and the membrane 30 are arranged such that a movement of the membrane 30 results in a change of a capacitance between the capacitor plate 59 and the membrane 30. In this case, the membrane 30 and the capacitor plate 59 effectively together constitute the capacitor of a capacitor microphone, and therefore may be used like the microphone 55 as described above in relation to figure 6. In one example, the membrane 30 incorporates an electret (not shown), whereby the capacitor microphone is an electret microphone, which does not require an externally applied electrical charge.

In all the embodiments described so far, the membrane 30 constitutes a (possibly air-permeable) barrier by dividing the channel 21 into the battery-side portion 21B and the ambient air-side portion 21A. Alternatively, the membrane 30 could be provided at the end of the channel 21 which is exposed to ambient air AV when the venting device 10 is fitted to the battery 100 by being received in the venting hole, i.e., the end of the channel 21 at the top of the drawing on figures 2 and 4-7bis. In this case, the channel 21 would not have an ambient air-side portion 21A.

In some embodiments, as shown on figure 8, the venting device 10 comprises a cover 70. The cover 70 is air-impermeable and arranged to be exposed to ambient air AV when the venting device 10 is fitted to the battery 100 by being received in the venting hole 125. The cover 70 may be made, for instance, by injection molding of a suitable plastic, in particular a fiber-reinforced plastic. Examples of suitable fiber-reinforced plastics include glass-fiber reinforced polybutylene terephthalate (PBT) such as PBT 30GF, glass-fiber reinforced PA66 such as PA66 30GF, and glass-fiber reinforced polypropylene (PP) such as PP 30GF, which provide good stability under heat. Preferably, the plastic or fiber-reinforced plastic comprises one or more anti-flaming agents. Possibly, the cover 70 and the housing 20 are made of the same plastic.

The cover 70 is shown on figure 8 in its closing position, i.e., in its position in which the cover 70 closes the ambient air-side portion 21A of the channel 21. Further, the venting device 10 comprises a cover sensor 57 configured to detect whether the cover 70 has moved from the closing position to a dislodged position (not shown) in which the cover 70 does not close the ambient air-side portion 21A. If the cover 70 has moved to the dislodged position, a determination may be made that the cover 70 has been dislodged due to high pressure gases generated during thermal runaway of the battery 100 having escaped through the channel 21. The cover sensor 57 thus allows to detect when high pressure gases generated during thermal runaway of the battery 100 have escaped, even without providing a detection circuit on the membrane 30 for detecting whether the membrane 30 has ruptured.

Many different types of sensors may be used as the cover sensor 57. According to one preferred option, the cover sensor 57 consists of or comprises a switch configured to switch (that is: to move from closed to open or from open to closed) when the cover 70 moves from the closing position to the dislodged position. Such a switch preferably contacts the cover 70 when the cover 70 is in the closing position, which enables simple and reliable detection by the cover sensor 70. The switch can be constructed as a pushbutton or a toggle switch, or more preferably as a microswitch. Alternatively, the cover sensor 57 may consist of or comprise a reed switch, a Hall effect sensor, a capacitive sensor, a magnetic sensor, a conductive contact sensor, etc.

Figure 8 additionally shows a different possible position for the connector 49, outside of the channel 21. Wires and/or cables connecting the connector 49 to the PCB 40 may pass through one or more through holes (not shown) provided in the housing 20.

Note that in some embodiments in which the cover 70 is present, the membrane 30 may be omitted from the venting device 10. The cover 70, which is air-impermeable, therefore constitutes a barrier instead of the membrane 30. Since the cover 70 is air-impermeable, it is preferable that the venting device 10 comprises the above-mentioned breathing port 60, arranged to bypass the cover 70.

Figure 9 is a schematic cross-section along line IX-IX on figure 8 and shows that in some embodiments, the venting device 10 further comprises a particle arrestor 80. The particle arrestor 80 is arranged to be within the inner volume BV of the battery 100 when the venting device 10 is fitted to the battery 100 by being received in the venting hole 125. The particle arrestor 80 comprises a grille 81 which opens into the battery-side portion 21B of the channel 21. By "grille", there is meant any pattern of side-by-side openings formed in the particle arrestor 80, for instance formed in a flat portion of the particle arrestor 80 as shown on figure 9. The grille 81 allows high pressure gases generated during thermal runaway of the battery 100 to escape through the channel 21 while at the same time arresting at least some of the debris or other particles which may have been generated during thermal runaway. The particle arrestor 80 may be made of a metal alloy such as stainless steel, aluminum or an aluminum alloy, for instance from a sheet of the metal alloy.

Preferably, as shown on figure 9, the cover 70 comprises protrusions 75 arranged in the channel 21 and the particle arrestor 80 comprises corresponding elastic portions 85. The elastic portions 85 engage the protrusions 75 to maintain the cover 70 in the closing position shown on figures 8 and 9. Thereby, the elastic portions 85 contribute to determining the overpressure in the channel 21, resulting from the high pressure gases generated during thermal runaway of the battery 100, which will dislodge the cover 70 from its closing position. Note that although two protrusions 75 and two corresponding elastic portions 85 are shown on figure 9, any number can be provided as desired. Preferably, the elastic portions 85 are made from the same sheet of metal alloy as the rest of the particle arrestor 80. In one example, the elastic portions 85 are leaf springs.

Figure 10 is a functional block diagram which shows one possibility for implementation aboard an electric vehicle (not shown) which includes the battery 100 having the venting device 10 fitted. Typically, the battery 100 provides electrical power to a powertrain (not shown) of the electric vehicle. According to this possibility, the MCU 42 of the PCB 40 is connected to the BMS 130, and the BMS 130 is connected to an electronic control unit (ECU) 1001 of the electric vehicle. The MCU 42 transmits an output S of the sensor system 50 to the BMS 130. Based on the output S, the BMS 130 determines whether thermal runaway of the battery 100 has started. As mentioned above, this determination may be made based on the simultaneously occurring variation of two or more quantities measured by the sensor system 50, such as the simultaneously occurring variation of at least two of temperature within the battery-side portion 21B of the channel 21; pressure within the battery-side portion 21B of the channel 21; and concentration of a specified gas within the battery-side portion 21B of the channel 21. Upon determining that thermal runaway of the battery 100 has started, the BMS 130 generates an alarm A and transmits the alarm A to the ECU 1001. Upon receiving the alarm A, the ECU 1001 may command one or more action such as displaying a visual alarm on a dashboard of the electric vehicle and/or sounding an auditory alarm.

Note that in embodiments where there is provided a magnet 36 on the membrane 30 and a coil 56 on the PCB 40 as shown in figure 7, the auditory alarm may be sounded by circulating a suitably controlled electrical current through the coil 56, whereby the magnetic field generated by the coil 56 interacts with the magnet 36 and the membrane 30 moves, producing the desired sound.

Independently of whether the alarm A is generated, the coil 56 may additionally be energized to generate a sound for alerting pedestrians around the electric vehicle when the electric vehicle is moving, as may be required by some safety standards.

According to another possibility shown on figure 11, the alarm A is generated by the ECU 1001 rather than by the BMS 130.

According to yet another possibility shown on figure 12, the alarm A is generated by the MCU 42 rather than by the BMS 130 or the ECU 1001, and the MCU 42 transmits the alarm A to one of the BMS 130 and the ECU 1001.

The connections shown on figures 10, 11 and 12 between the MCU 42, the BMS 130 and the ECU 1001 may be implemented in many ways as desired, for instance over a Controller Area Network (CAN) bus.

It should be noted that the implementations described above are not limited to electric vehicles. The battery 100 having the venting device 10 fitted may belong to a stationary energy storage system which stores electrical energy in the battery 100. In such systems, implementation is similar to what has been described in relation to figures 10, 11 and 12 except that a controller of the electrical system functions as the ECU 1001.

The invention can be the subject of numerous variations and applications other than those described above. In particular, it is obvious that, unless otherwise specified, the various structural and functional features of each of the aforementioned embodiments must not be considered to be combined and/or closely and/or inextricably linked to one another, but, on the contrary, must be considered to be simple juxtapositions. Furthermore, the structural and/or functional features of the various embodiments described above can be the subject, in whole or in part, of any different juxtaposition or of any different combination.

## Claims

1. - Venting device (10) for a battery (100), the venting device (10) comprising:
- a housing (20), wherein the housing (20) includes an inner wall (22) which defines a channel (21) for fluidly connecting an inner volume (BV) of the battery (100) to ambient air (AV);
- a barrier (30, 70) which extends across the channel (21) to define a battery-side portion (21B) of the channel (21); and
- a sensor system (50) configured to measure at least one quantity indicative of thermal runaway of the battery (100), wherein at least one sensor (51, 52, 55, 56) of the sensor system (50) is arranged in the battery-side portion (21B) of the channel (21).

2. - Venting device (10) according to claim 1, wherein the venting device (10) further comprises a printed circuit board (40), at least a part of the sensor system (50) being arranged on the printed circuit board (40).

3. - Venting device (10) according to claim 2, wherein the printed circuit board (40) includes:
- a sensor support portion (45) extending into the battery-side portion (21B) of the channel (21), said part of the sensor system (50) being arranged on the sensor support portion (45); and
- an electronics support portion (41), the electronics support portion (41) being arranged in a recess (24) of the housing (20), the recess (24) opening onto the battery-side portion (21B) of the channel (21).

4. - Venting device (10) according to any one of claims 1 to 3, wherein the sensor system (50) comprises at least one gas sensor (51) arranged in the battery-side portion (21B) of the channel (21) and configured to measure a concentration of a gas, the gas being at least one of: a carbonate ester, preferably a carbonate ester selected from the group consisting of ethylene carbonate, dimethyl carbonate, and diethyl carbonate; propylene glycol; methane; dihydrogen; and ethylene.

5. - Venting device (10) according to any one of claims 1 to 4, wherein the sensor system (50) comprises a temperature sensor (52) and/or a pressure sensor arranged in the battery-side portion (21B) of the channel (21).

6. - Venting device (10) according to any one of claims 1 to 5, wherein the housing (20) comprises a breathing port (60) for fluidly connecting the inner volume (BV) of the battery (100) to ambient air (AV) by bypassing the barrier (30, 70), and a valve (61) which closes the breathing port (60), the venting device (10) being configured to open the valve (61) in response to a pressure difference between the inner volume (BV) of the battery (100) and ambient air (AV) being greater than a pressure difference threshold.

7. - Venting device (10) according to any one of claims 1 to 6, wherein the barrier comprises a membrane (30), optionally wherein the membrane (30) is air-permeable.

8. - Venting device (10) according to claim 7, wherein the membrane (30) divides the channel (21) into the battery-side portion (21B) and an ambient air side portion (21A).

9. - Venting device (10) according to any one of claims 7 to 8, wherein: the sensor system (50) comprises a microphone (55); or the venting device (10) comprises a magnet (36) fixed to or deposited on the membrane (30) and the sensor system (50) comprises a coil (56), the coil (56) and the magnet (36) being arranged such that a movement of the membrane (30) moves the magnet (36) and thereby induces an electrical current in the coil (56); or the sensor system (50) comprises a capacitor plate (59), the capacitor plate (59) and the membrane (30) being arranged such that a movement of the membrane (30) results in a change of a capacitance between the capacitor plate (59) and the membrane (30).

10. - Venting device (10) according to any one of claims 1 to 9, wherein the barrier comprises a cover (70) which is air-impermeable and arranged to be exposed to ambient air (AV) when the venting device (10) is fitted to the battery (100), the cover (70) having a closing position in which the cover (70) closes the channel (21), and the sensor system (50) further comprises a cover sensor (57) configured to detect whether the cover (70) has moved from the closing position to a dislodged position in which the cover (70) does not close the channel (21), preferably wherein the cover sensor (57) comprises a switch configured to switch when the cover (70) moves from the closing position to the dislodged position, more preferably wherein the switch contacts the cover (70) when the cover (70) is in the closing position, even more preferably wherein the switch is a microswitch.

11. - Venting device (10) according to any one of claims 1 to 10, wherein the venting device (10) further comprises a particle arrestor (80) which is arranged to be within the inner volume (BV) of the battery (100) when the venting device (10) is fitted to the battery (100), the particle arrestor (80) comprising a grille (81) which opens into the battery-side portion (21B) of the channel (21).

12. - Venting device (10) according to claim 11 and according to claim 10, wherein the cover (70) comprises a protrusion (75) arranged in the channel (21), and the particle arrestor (80) further comprises an elastic portion (85), the elastic portion (85) engaging the protrusion (75) to maintain the cover (70) in the closing position.

13. - Battery (100), the battery (100) comprising:
- a battery housing (120), the battery housing (120) comprising a plurality of housing walls (121, 123) which together enclose an inner volume (BV) of the battery (100), one of the housing walls (123) having a venting hole (125);
- at least one battery cell (110) arranged in said inner volume (BV); and
- a venting device (10) according to any one of claims 1 to 12, the venting device (10) being received in the venting hole (125) such that the channel (21) of the venting device (10) fluidly connects said inner volume (BV) to ambient air (AV).

14. - Electric vehicle comprising a battery (100) according to claim 13, wherein the electric vehicle further comprises a vehicle electronic control unit (1001) and the battery (100) includes a battery management system (130), and wherein one among the vehicle electronic control unit (1001) and the battery management system (130) is connected to the sensor system (50) and is configured to generate an alarm (A) upon determining, based on an output (S) of the sensor system (50), that thermal runaway of the battery (100) has started.

15. - Stationary energy storage system comprising a battery (100) according to claim 13.
